# EUROPEAN PATENT APPLICATION

(11) **EP 4 492 734 A1**
(43) Date of publication of application: **15.01.2025**
(21) Application number: 23185566.9
(22) Date of filing: 14.07.2023
(51) Int. Cl.: H04L 12/28, G05B 15/00

(54) **CONTROLLING SMART ENVIRONMENTS BASED ON A SEMANTIC CONTROL MODEL**

(71) Applicant: Koninklijke Philips N.V., 5656 AG Eindhoven (NL)
(72) Inventor: GARCIA MORCHON, Oscar, 5656AG Eindhoven (NL)
(74) Representative: Philips Intellectual Property & Standards

(57) **Abstract**

This invention relates to apparatuses and methods for controlling a smart environment, wherein a semantic control model (such as a (generative) artificial intelligence (Al) or machine learning (ML) model) is used to efficiently control smart devices, wherein the smart devices may be configured to store the semantic control model. Furthermore, the smart devices may be configured to receive prompts and to apply the received prompts to the stored semantic control model in order to derive and reproduce a smart device configuration.

## Description

### FIELD OF THE INVENTION

This invention relates to systems for controlling smart devices in smart environments (such as smart home systems or smart communication systems). This invention can also be used to control smart devices in other environments, e.g, wireless communication devices.

### BACKGROUND OF THE INVENTION

Smart home systems comprise smart devices (e.g., sensors and actuators for sound, video, lighting, etc) that aim at providing a pleasant home experience. There are standards such as "Matter" that aim at achieving interoperability between devices by providing a unified Internet Protocol (IP) communication layer and a unified data model for controlling smart devices. Matter is an open-source connectivity standard for smart home and Internet of things (IoT) devices, that promises that smart devices work with each other regardless of which company manufactures them, that smart home devices will continue to be usable on a home network even when no connection to the internet is available, and that communications with smart home devices are secure.

However, currently, smart devices (such as smart lights, a smart speakers, smart televisions (TVs), smart blinds, etc.) are controlled by specifying the specific content that needs to be played or a specific configuration that needs to be applied. Furthermore, a desired output (e.g, a scene such as "natural light", "diamond", "rest", "bright" etc. and/or specific pixels in the scene to determine a light color) of a smart device (e.g., a smart light) needs to be configured by a user and provided to the smart devices. Moreover, a given lighting color/intensity may not be equally applicable or generate the same effect, in different environments, e.g., because the colors of the walls are different, the users have slightly different preferences, and/or the devices (number/type/distribution) are different.

Further, smart communication systems allow people to communicated with each other. For instance, Facebook Portal TV allows people to communicate with each other comfortably from the couch of their living rooms. The Facebook Portal TV can be linked with a Whatsapp account and a first Facebook Portal TV can record the surrounding in a first home, transfer it to a second Facebook Portal TV that will display through a second TV in the second home.

However, such systems are not capable of transferring the specific smart environment settings, e.g., a first set of smart environment settings associated to the first set of smart devices in the first home so that a second set of smart devices in the second smart home can use the same/similar smart environment settings.

Therefore, the control of smart devices (e.g., steering, creation of settings for smart devices, users and/or environments, encoding of data influenced by smart devices) may be inefficient and/or complex since it may require specifying /transferring a high amount of content. It is also challenging how multiple smart devices can be orchestrated to work together to produce a similar content. Ideally, the user would just like to express the type of settings desired, such as the light desired, and the lighting system should just provide it.

In general, a comprehensive smart home system should be able to steer in a comprehensive manner not only lighting devices, but also other smart devices, and this should be done in a transparent manner for the user independently of the features of the environment, the devices in the environment. For instance, if a user says: "cozy environment", the smart home system should be able to create a setting and execute a setting in which all smart devices work together to create the desired cozy environment.

### SUMMARY OF THE INVENTION

It is an object of the present invention to provide more efficient control of smart devices in a smart environment.

This object is achieved by an apparatus as claimed in claim 1, by a hub or smart device as claimed in claim 10, by a smart device as claimed in claim 11, by a system as claimed in claim 13, by a method as claimed in claim 14 and 15, and by a computer program product as claimed in claim 16.

According to a first aspect (directed to a controller at a hub or at a smart device), an apparatus is provided for controlling at least one smart device, in particular a sensor and/or an actuator, in a smart environment, wherein the apparatus is configured to generate, adapt, retrieve or receive at least one of a semantic control model associated to the at least one smart device and a semantic prompt associated to a scene and to use at least one of the semantic control model and the sematic prompt to control the at least one smart device.

According to a second aspect, a hub or a smart device comprising an apparatus according to the first aspect is provided.

According to a third aspect, a smart device is provided, that is configured to receive or retrieve a device configuration including a semantic control model and a control prompt for controlling the smart device.

According to a fourth aspect, a system is provided, that comprises a hub according to the second aspect and one or more smart devices according to the second or third aspect.

According to a fifth aspect (directed to a hub or a smart device), a method of controlling a smart device, in particular a sensor and/or an actuator, in a smart environment is provided, wherein the method comprises:
- generating, adapting, retrieving or receiving a semantic control model at a hub or smart device of the smart environment, wherein the semantic control model is associated or applicable to the smart device; and
- using the semantic control model to control the smart device.

According to a sixth aspect (directed to a smart device), a method of controlling a smart device, in particular a sensor and/or an actuator, in a smart environment is provided, wherein the method comprises:
- receiving a device configuration including a semantic control model and/or a control prompt at the smart device; and
- controlling the smart device based on the device configuration.

According to a seventh aspect, a computer program product is provided, which comprises code means for producing the steps of the method of the fifth aspect or the sixth aspect when run on a computer device.

Accordingly, a semantic control model (such as a (generative) artificial intelligence (AI) or machine learning (ML) model, e.g., a diffusion model, a generative pre-trained transformer (GPT) model (e.g., DALL-E, https://en.wikipedia.org/wiki/DALL-E)) can be used to efficiently control smart devices ("prompt to scene"), wherein the smart devices may be configured to store the semantic control model. Thereby, the smart devices can be individually configured to receive control (semantic) prompts and to apply the received prompts to the received semantic control model in order to derive and reproduce a smart device configuration. The output or function of a smart devices can thus be controlled via a selected prompt as defined by the device configuration.

The semantic extraction model (such as CLIP, im2prompt, etc.) can as well be used to efficiently extract semantic meaning from, e.g., images ("scene to prompt"). Such models can be used to extract semantic meaning from smart home scenes, such as those generated by smart devices (e.g., smart light, smart TV, music). They may be used to extract semantic meaning from the environment (sunny/rainy day, hot/cold day, daytime, etc.). Extraction may be done by using smart devices (including functions such as a camera and a microphone, etc.) to take one or multiple pictures and extracting the semantic meaning by means of a semantic model extraction. This can allow observation of a scene (e.g., smart home environment in a first smart home, creating one or more prompts descriptive of the scene (e.g., using something like that described in Yoad Tewel et al.: "ZeroCap: Zero-Shot Image-to-Text Generation for Visual-Semantic Arithmetic" (arXiv:2111.14447v2 [cs.CV] 31 Mar 2022) or Alec Radford et al.: "Learning Transferable Visual Models From Natural Language Supervision" (arXiv:2103.00020), and transferring the prompt(s) to a second location and apply it/them to a semantic control model to create a similar scene.

According to a first option that can be combined with any one of the first to seventh aspects, the apparatus may be configured to distribute at least one of the semantic control model and the semantic prompt to the at least one smart device. This allows control of the smart device via a prompt that can be translated by the semantic control model.

According to a second option that can be combined with the first option or any one of the first to seventh aspects, the apparatus may be configured to receive a command, derive or obtain a control prompt from the command, and apply the control prompt to the semantic control model to obtain a device configuration. Thus, a smart device can be configured based on the semantic control model via a simple control prompt.

According to a third option that can be combined with the first or second option or any one of the first to seventh aspects, the device configuration may be used to control the at least one smart device. Thus, a smart device can be controlled based on the semantic control model via a simple control prompt.

According to a fourth option that can be combined with any one of the first to third options or any one of the first to seventh aspects, the semantic control model and/or the control prompt may be refined based on feedback obtained from a user. Thus, the effect or result of the semantic control model can be evaluated and adjusted (refined) by the user.

According to a fifth option that can be combined with any one of the first to fourth options or any one of the first to seventh aspects, an indication of the semantic control model and/or control prompt may be received from a remote device. Thereby, external information from other smart environments, external networks, model repositories etc. can be used for optimizing the proposed model-based control or configuration.

According to a sixth option that can be combined with any one of the first to fifth options or any one of the first to seventh aspects, a cloud-based service and/or blockchain may be contacted to retrieve and/or verify the semantic control model for the smart device. Thereby, software and hardware requirements at the hub can be minimized by using cloud-based resources.

According to a seventh option that can be combined with any one of the first to sixth options or any one of the first to seventh aspects, the semantic control model may be tailored to the smart environment of the smart device by taking into account one or more of capabilities of available smart devices, user preferences, and location of smart devices. Thus, the proposed model-based control or configuration can be adapted to the individual smart environment of the controlled smart device.

According to an eighth option that can be combined with any one of the first to seventh options or any one of the first to seventh aspects, a smart device in a second environment may be controlled based on a device configuration including the semantic control model and a control prompt of a first environment. This allows transfer of the model-based control or configuration to other smart environments.

According to a ninth option that can be combined with any one of the first to eighth options or any one of the first to seventh aspects, the smart device may be configured to infer the device configuration by identifying other smart devices in a smart environment and determining their settings. Thereby, the model-based device configuration can be directly transferred between smart devices without involving the hub(s).

It shall be understood that the apparatus of claim 1, the hub or smart device of claim 10, the smart device of claim 11, the system of claim 13, the method of claim 14 and 15, and the computer program product of claim 16 may have similar and/or identical embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a system architecture of a smart environment where embodiments can be implemented;
Fig. 2 schematically shows a signaling and process diagram of an embodiment for registering a smart device and managing/retrieving a semantic control model for smart device control;
Fig. 3 schematically shows a signaling and process diagram of an embodiment for steering a smart device in a first environment based on prompts and a semantic control model for smart device control; and
Fig. 4 schematically shows a signaling and process diagram of an embodiment for steering the smart device of Fig. 3 in a second environment based on the smart device settings of the first environment.

### DETAILED DESCRIPTION OF THE EMBODIMENTS

Embodiments of the present invention are now described based smart home system. However, the present invention may also be used in connection with other smart environments and networked systems such as cellular networks or WiFi networks.

Throughout the following disclosure, a "smart home" or "network" is understood as a network comprising sensors and actuators facilitating certain tasks (e.g., lighting or healthcare related). It may include a home network hub (e.g., data distribution entity) in charge of managing the home network and allowing multiple devices or nodes (e.g., sensors and actors) to connect to a device to participate in the network. The home network hub may also be an entity in charge of orchestrating secure data distribution, e.g., data originated in the network. The home network hub may include or provide access to a router device to link the home network to an external network (e.g., the Internet) and/or may allow adding or removing devices from the network. The network hub may be a smart device in charge of managing the smart home such as a smart phone or a smart home assistant such as Alexa or Google Home. These entities may be centralized, or they may be distributed.

Furthermore, the term "metaverse" is understood as referring to a potentially persistent shared set of interactable spaces, within which users may interact with one another alongside mutually perceived virtual features (i.e., augmented reality (AR)) or where those spaces are entirely composed of virtual features (i.e., virtual reality (VR)). VR and AR may generally be referred to as "mixed reality" (MR).

Additionally, the term "data" is understood as referring to a representation according to a known or agreed format of information to be stored, transferred or otherwise processed. The information may particularly comprise one or more channels of audio, video, image, haptic, motion or other form of multimedia information that may be synchronized. Such multimedia information may be derived from sensors (e.g., microphones, cameras, motion detectors, etc.) or may be partially or wholly synthesized (e.g., live actor in front of a synthetic background).

The term "data object" is understood as referring to one or more sets of data according to the above definition optionally accompanied by one or more data descriptors that provide extra semantic information about the data that influences how it should be processed at the transmitter and at the receiver. Data descriptors may be used to describe, for example, how the data is classified by a transmitter and how it should be rendered by a receiver. By way of example, data representing an image or a video sequence may be broken down into a set of data objects that collectively describe the full image or video and which may be individually processed (e.g., compressed) substantially independently of other data objects and in a manner optimal for the object and its semantic context. As a further example, a content program (as described later in some embodiments) may also be understood as a data object (e.g., a compressed semantic object).

Further, the term "data object classification" is understood as referring to a process in which data is divided or segmented into multiple data objects. For instance, an image or a scene might be divided into multiple parts, e.g., a forest in the background and a person in the foreground. Data object classification criteria are used to classify a data object. In this disclosure, such criteria may include at least one of a measure of semantic content of a data object, a context of the data object, a class of compression technique best suited to retain sufficient semantic content for a given context and so on.

Furthermore, a "semantic control model" is understood as referring to a repository of tools and data objects that can be used to assist in controlling smart devices and/or smart environments. For example, the model may comprise algorithms used in the analysis and compression of data objects or may comprise data objects that can be used as the basis of a generative compression technique. Advantageously, the model may be shared or possessed by a transmitter and a receiver and/or may be updated or optimized according to a semantic content of the data being transferred.

Additionally, a "prompt" is understood as referring to any kind of gesture, physical action (guiding, touching, etc.), visual support (pictures, photographs, etc.), audio support (voice, music, tune, spoken word(s) etc.) or other detectable stimulus.

Generative artificial intelligence (AI) can be understood as a set of algorithms, capable of generating seemingly new, realistic content-such as text, images, or audio-from training data. Powerful generative AI algorithms are built on top of foundation models that are trained on a vast quantity of non-labeled data in a self-supervised way to identify underlying patterns for a wide range of tasks. New generative AI models are not only capable of carrying on sophisticated conversations with users. They also generate seemingly original content. Popular examples are "ChatGPT" including a generative text-based AI model, "DALL-E" or "MidJourney" including a generative text-to-image AI model, and "Gato" including a generative text-to-video AI model.

Generative AI allows generating multiple types of data based on brief prompts. An example of them is stable diffusion. Stable Diffusion was first publicly released on August 22, 2022, is an open-source machine learning model that can generate images from text, modify images based on text, or fill in details on low-resolution or low-detail images. It has been trained on billions of images and can produce results that are comparable to the ones you'd get from DALL-E 2 and MidJourney.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

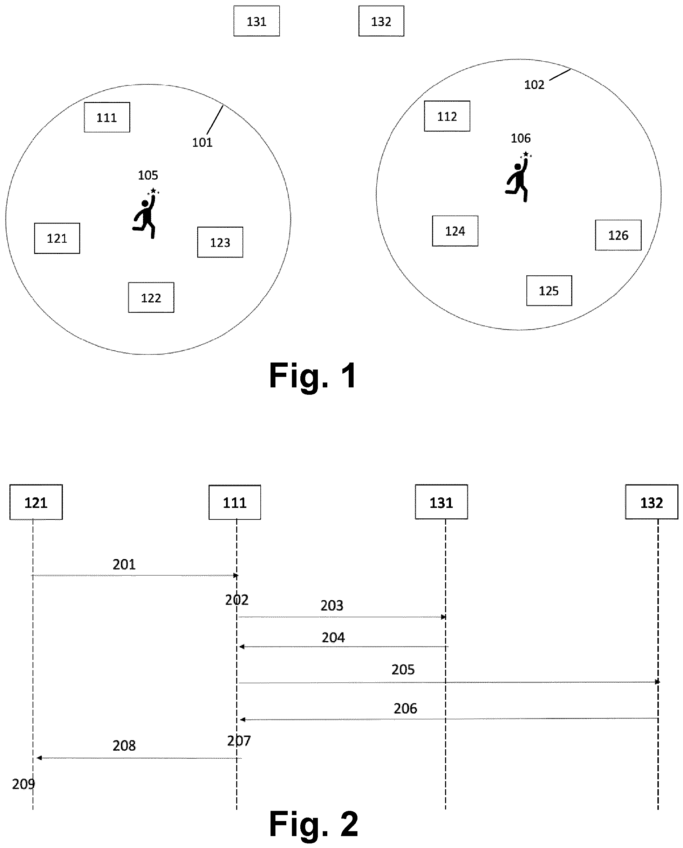

Fig. 1 schematically shows a system architecture of a smart environment where various embodiments described below can be implemented.

The exemplary system architecture of Fig. 1 includes a first smart environment 101 and a second smart environment 102 which both may be smart homes. A first user 105 is located in the first smart environment 101 and a second user 106 is located in the second smart environment 102.

Furthermore, the system architecture of Fig. 1 includes two smart hubs 111 and 112 in charge of a respective one or both of the smart environments 101, 102. The smart hubs 111 and 112 may be centralized or distributed, locally or in combination with cloud services.

The smart environments 101, 102 include smart home devices 121-126 such as smart lighting devices, smart speakers, smart blinds, smart TVs, smart sensors, smart cameras, etc. These entities may be centralized, or they may be distributed. The smart hubs 111 and 112 may be configured to integrate multiple technologies and may provide application control and automation of respective ones of the smart devices 121-126.

The smart environments 101, 102 may also refer to any type of 3GPP telecommunication/wireless network systems, such as cellular telecommunications technologies A Radio Access Network (RAN) may include access devices such as base stations (e.g., 5G gNB), mobile base stations, Reflective Intelligent Surfaces (RIS), Smart Repeaters, Wireless Sensing Devices (e.g., integrated in a base station), etc providing communication and/or sensing capabilities/services to target devices (e.g., 5G User Equipment (UE)) and/or entities (e.g., a person using a UE or being sensed). The RAN may be orchestrated by a core network (e.g., 5G CN).

Additionally, a first cloud-based service 131 may be provided, that is configured to support at least one of the smart hubs 111, 112. Such a support may comprise upload of data from the smart devices 121-126 via a respective smart hub to the first cloud service 131 for processing, execution of automation rules by the first cloud service 131, and download of a resultant command (e.g., a command to switch on/off a light) to one or more of the smart devices 121-126 via the respective smart hub.

Such a cloud-managed hub approach provides advantages in that the smart hubs 111, 112 do not require a lot of memory and/or processing power and are therefore less complex and less expensive, and that a mobile app-centric system can be implemented that does not require a desktop computer for setup or programming.

Moreover, a second cloud-based service 132 may be provided, that is configured to support AI or machine learning (ML) models. For instance, the second cloud-based service may be an independent party in charge of managing such AI/ML models for smart devices or it may be the backend server of a device manufacturer.

The cloud-based services 131, 132 provide information technology (IT) as a service over the Internet or dedicated network, with delivery on demand. Cloud based services range from full applications and development platforms, to servers, storage, and virtual desktops. Such cloud-based services allow the users 105, 106 to access, share, store, and secure information in "the cloud".

In the following, different embodiments are described with reference to respective and processing diagrams shown in Figs. 2 to 4, wherein the arrows indicate direction of information flow between the components shown at the top of the diagrams and the time proceeds from the top to the bottom of the diagrams. The steps of these flow diagrams may at least partly be performed or initiated by respective instructions of a software program/routine that controls a controller provided at a respective device or component.

Fig. 2 schematically shows a signaling and process diagram of an embodiment for registering a smart device and managing/retrieving a semantic control model for smart device control. Not all steps/entities in the process may always be required. Steps may be performed once or multiple times and may be processed in a different order.

The entities (smart device 121, first smart hub 111, first and second cloud-based services 131, 132) involved in the process of Fig. 2 correspond to or are at least similar to those with same reference numbers of Fig. 1.

In step 201, the smart device 121 joins a smart environment (e.g., smart environment 101 of Fig. 1) and the smart hub 111. This may be achieved by a pairing process or other authentication process where devices exchange information necessary to establish an encrypted connection. It may involve authenticating the identity of the two devices to be paired, encrypting the link, and distributing keys to allow security to be restarted on a reconnection.

Then, in step 202, the smart hub 111 verifies the devices and stores information related to the smart device 121, e.g., the type of AI model that is required.

In step 203, the smart hub 111 may contact the first cloud-based service 131 to retrieve a first AI model and/or settings suitable for the smart device 121 and/or smart hub 111. Retrieval of the AI model or suitable settings is done in step 204.

In step 205, the smart hub 111 may contact the second cloud-based service 132 to retrieve a second AI model and/or settings suitable for the smart device 121 and/or smart hub 111. Retrieval of the AI model or suitable settings is done in step 206.

In Steps 203, 204, 205, 206, the first cloud-based service 131 may be managed by the operator of the smart hub 111 while the second cloud-based service 132 may be managed by the smart device manufacturer. The first and second AI models/settings may be complementary or overlapping. They may be complementary if, e.g., the first AI model is more tailored for the smart hub 111 while the second model is more applicable to the smart device 121. They may be overlapping if, e.g., the first/second AI models may be applied to, e.g., the smart hub 111.

In step 207, the AI model and/or settings are stored at the smart hub 111.

In step 208, the smart hub 111 distributes the AI model and/or settings to the smart device 121.

Finally, in step 209, the smart device 121 applies and/or stores the AI model and/or settings.

In a related embodiment, the smart hub 111 or another entity may tailor a generated AI model to the specific smart environment (e.g., smart environment 101) of the joining smart device (e.g., smart device 121), where it is deployed by taking into account one or more of the (capabilities of the) available smart devices (e.g., smart devices 121-123), user preferences, location of the smart devices, etc.

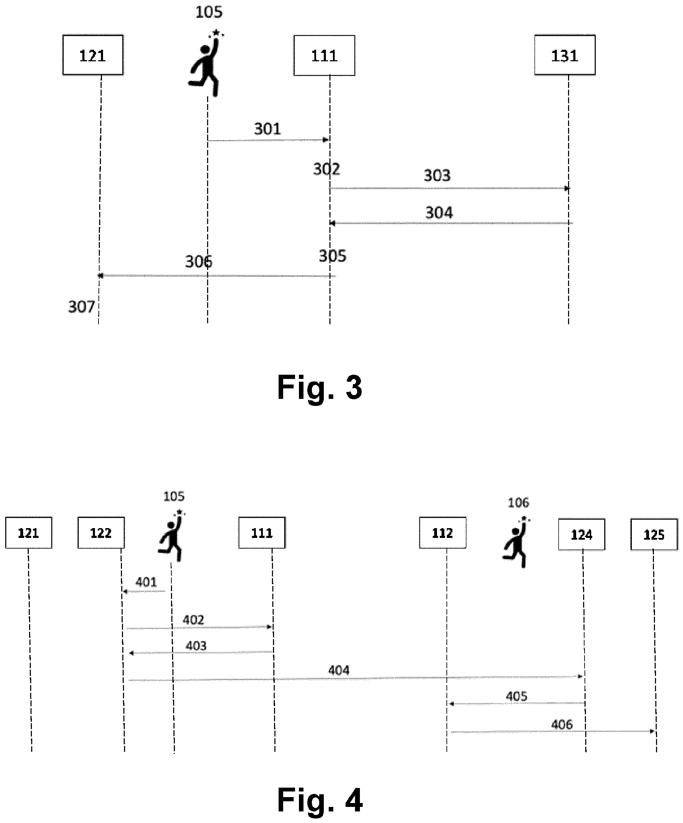

Fig. 3 schematically shows a signaling and process diagram of an embodiment for steering a smart device (e.g., smart device 121) in a first environment (e.g., smart environment 101) based on prompts and a semantic control model for smart device control. Not all steps/entities in the process may always be required. Steps may be performed once or multiple times and may be processed in a different order.

The entities (smart device 121, first user 105, first smart hub 111 and first cloud-based service 131) involved in the process of Fig. 3 correspond to or are at least similar to those with same reference numbers of Fig. 1.

In step 301, the first user 105 gives a command (e.g., a voice command) to the first smart hub 111.

In step 302, the first smart hub 111 processes the command. E.g., it may perform local processing (e.g., check for similar commands, associating the command to a user, etc) to derive/choose a prompt.

In step 303, the first smart hub 111 may contact the first cloud-based service 131 to obtain a suitable prompt command for the received command (for example, if in step 302 the smart hub 111 cannot derive/choose a prompt) enhanced with the processing/data obtained in step 302. Retrieval of the suitable prompt is done in step 204.

In step 305, the first smart hub 111 may store the received prompt or a locally generated or retrieved prompt.

In step 306, the first smart hub 111 sends the prompt to the smart device 121.

Finally, in step 307, the smart device 121 applies and/or stores the prompt together with its AI model and/or settings to infer a smart device configuration.

In a related embodiment, the first smart hub 111 may store the AI model and may apply the prompt to it to infer a smart device configuration in step 307. The first smart hub 111 may then send the smart device configuration to the smart device in an additional step 308 (not shown in Fig. 3), and the smart device 121 may then apply it in a further step 309 (not shown in Fig. 3).

In another related embodiment, the first smart hub 111 (or backend server(s)) may adapt the model and/or prompts based on user feedback so that if after step 307 the first user 105 dislikes the output of the smart device 121, the model and/or prompt may be adapted to better fit the preferences of the first user 105.

Fig. 4 schematically shows a signaling and process diagram of an embodiment for steering the smart device 121 of Fig. 3 in a second environment (e.g., the second environment 102 of Fig. 1) based on the smart device settings of the first environment (e.g., the first environment 101 of Fig. 1). Not all steps/entities in the process described here may always be required. Steps may be performed once or multiple times and may be processed in a different order.

The entities (smart devices 121, 122, 124 and 125, first user 105, second user 106, first smart hub 111, second smart hub 112) involved in the process of Fig. 4 correspond to or are at least similar to those with same reference numbers of Fig. 1. In an example, smart devices 121, 122, 124 and 125 may be, e.g., smart devices such as a smart TV and/or a smart camera and/or smart microphone for teleconferencing purposes, e.g., based on Facebook's portal TV.

In step 401, the first user 105 starts interacting with a first smart device 122 to trigger the sharing of the first smart environment with the second user 106 in the second smart environment.

In step 402, the first smart device 122 sends a command to the first smart hub 111 to retrieve the smart environment settings, which may include a list of AI/ML models as well as currently used prompts.

As indicated earlier, in a "scene to prompt" case, the devices (e.g., smart device 122, first smart hub 111) may also observe the (smart home) scene/environment to extract a prompt that is illustrative of the scene and can be used to steer the devices both/either in the local and/or remote environment.

In step 403, the first smart hub 111 forwards the retrieved smart environment settings to the first smart device 122.

In step 404, the first smart device 122 may create or use an existing connection (either direct or indirect (e.g., through the first smart hub 111 or a cloud service (e.g., first or second cloud service 131, 132 in Fig. 1)) to a second smart device 124 in the second smart environment. Once connected, the first smart device 122 may provide the second smart device 124 with a list of AI/ML models and/or currently used prompts (i.e., smart environment settings) in the first smart environment. Additionally/alternatively, the communication may also be between the smart hubs 111 and 112 on behalf of the smart devices in the smart environments.

In step 405, the second smart device 124 may communicate the obtained/extracted configuration (smart environment settings) to the second smart hub 112.

Finally, in step 406, the second smart hub 112 may provide another smart device 125 of the second smart environment with required smart environment settings (e.g., a required AI/ML model and/or a required prompt) to reproduce the first smart environment settings in the second smart environment.

In a related embodiment, this process may not relay semantic control models (e.g., AI/ML models) and/or prompts, but may just transfer standard smart device configurations from the first smart environment to the second smart environment.

In another related embodiment, the first smart device 122 may not retrieve the smart environment settings but infer the settings required to create a similar scene by identifying other smart devices (e.g., smart device 121) in the first environment and determining their settings and/or observing the first environment itself.

In other embodiments, smart devices (e.g., around a TV) may receive a prompt (e.g., the word "forest") and may then generate a corresponding visual or audio output. For instance, smart audio device (e.g., Sonos devices) may have a semantic control model (e.g., a generative AI/ML model) that produces the sound of the wind through the leaves of the trees, or smart lighting devices may have a semantic control model (e.g., a generative AI(ML model) that adapts the light color to green.

Thus, a smart system, e.g., a smart lighting system (e.g., the Hue system), may be capable of synchronizing to a data input, e.g., film/game, by monitoring/analyzing data of the data exchanged over a high-definition multimedia interface (HDMI) or received from other devices, either local to the smart environment or remote. This data representation can be standardized. For instance, by encoding in the data (e.g., film) itself (e.g., a Netflix series) how smart devices should behave, e.g., by means of prompts. To achieve this, smart devices (e.g., a TV) may be provided with a smart home interface (e.g., a Matter interface) so that smart devices can be controlled based on that control data. This control data may be prompt-based.

In the above embodiments (e.g., for a "scene to prompt" implementation), the smart devices may be configured as a single device or an array of devices and may be configured to capture e.g. some aspects of a scene, typically, but not necessarily in real time. Examples include a camera, a microphone, a motion sensor and so on. Some devices may capture stimuli outside human sensory range (e.g., infra-red camera, ultrasonic microphone) and may 'down-convert' them to a human-sensible form. Some devices may comprise an array of sensor elements that provide an extended or more detailed impression of the environment (for example, multiple cameras capturing a 360° viewpoint, multiple microphones capturing a stereo or surround-sound sound field). Sensors with different modalities may be used together (e.g., sound and video). In such cases, different data streams need to be synchronized. A transmitting device equipped with sensors may be VR/AR glasses or simply a UE.

In addition, an (optional) rendering device (e.g., audio, video) may be provided, that renders some aspect of a scene, typically in real time. Examples include a video display or projector, headphones, a loudspeaker, a haptic transducer and so on. Some rendering devices may comprise an array of rendering elements that provide an extended or more detailed impression of a captured scene (for example, multiple video monitors, a loudspeaker array for rendering stereo or surround-sound audio). Rendering devices with different modalities may be used together (e.g., sound and video). In these cases, a rendering subsystem must ensure that all stimuli channels are rendered in synchrony.

Furthermore, in embodiments, prompts for text-to-image models (such as latent diffusion models) may be used. This technique ("textual inversion") can be done quickly and iteratively, as described in Rinon Gal et al.: "An Image is Worth One Word: Personalizing Text-to Image Generation using Textual Inversion" (retrievable at: https://textual-inversion.github.io/).

Additionally, in embodiments, image classification may run rapidly on low-capability devices as described in Salma Abdel Magid et al.: "Image Classification on IoT Edge Devices: Profiling and Modeling" (retrievable at: https://arxiv.org/pdf/1902.11119.pdf).

Recent techniques have tried to address the problem of semantic loss. The state of the art in this area is represented by textual inversion, i.e., dynamically learning embeddings representing previously unseen objects. Thus, guide images may be used to ensure that learned embeddings adequately represent the observed reality (as represented by the guide image). Such learned embeddings are referred to as "learned prompts".

According to embodiments, smart devices (such as UEs, cameras, microphones, light sensors) may observe a scene using sensing of some kind (which can include audio, video, image capture, etc.) and may then segment its observation to produce instances relating to identified semantic objects. For those parts of the scene which can be well-reconstructed, for instance, the mood of the scene, the transmitting device may directly generate or extract a suitable learned prompt. This prompt can then be used, e.g., at a remote location, to recreate the same scene, e.g., the mood of the scene.

In an embodiment, the processes of the above or other embodiments may run predictively. For example, prompts may be generated predictively based on locally predicted motion within a scene or based on communication parameters (e.g., delay) with a receiving device. It may pre-transmit these, and then when a true change in a scene is observed, simply transmit a short command as to which prompt to use, e.g., plus a small correction factor (as described e.g. in Zhihong Pan et al.: "EXTREME GENERATIVE IMAGE COMPRESSION BY LEARNING TEXT EMBEDDING FROM DIFFUSION MODELS*"*) to correct for differences between the observed scene and the predicted one. This could allow for near-zero added latency even for very high bandwidth content.

In an embodiment related to multimedia data, the prompts may be linked to metadata that may include multiple parameters. The metadata may serve to facilitate reconstruction of compressed data, in particular, when the data relates to, e.g., multimedia data or video.

In a first variant, a prompt can be linked to a temporal range (e.g., to enable the reproduction of a scene, video or audio) so that a single prompt needs to be transmitted for a given period of time. To this end, the prompt can be linked to metadata including parameters such as an estimated decay time (e.g., number of frames in video) over which it is expected or known to be valid. The prompt could optionally be used past this decay time but at the cost of increasing semantic loss.

In a second variant, a moving image or scene could be linked to an initial prompt, an end prompt, a temporal range, and a moving pattern. The receiver may then be configured to use the reconstruction model to reconstruct movement (e.g., the changing scene) from the prompt and metadata.

In a third variant, prompts or compressed data related to different data types (e.g., audio and video) may need to be synchronized. For instance, a video prompt may include metadata with a "link" to its audio prompt. This third variant may be of particular interest if audio and video are both subject to generative compression where prompts need to be linked. Various ways to do this may include matched `decay times' for the audio and video prompts (as above) and/or a trained reconstruction model which reconstructs both audio and video from a shared latent space, and design prompts for that latent space and/or use of generative compression for the video only, wherein the audio uses something else (in which case the audio could just be linked in time to the video frames). For instance, compressed data of different data types may be linked to metadata determining the time frame the data is rendered. For instance, if the image in a video relates to prompt "Alice waking in the street" with metadata "Time: [0.00", 5.00"]" the audio in a video relates to prompt "Alice says: "Hi darling"" with metadata "Time: [2.00"-3.50"]", then synchronization requires to play the audio related to the audio prompt with a duration of 1.50 starting in second 2. The fact that the audio prompt indicates that Alice speaks, this also influences the video rendering requiring that Alice is rendered so as to speak "Hi darling" between second 2 and second 3.50.

In a fourth variant (relevant, e.g., for audio and/or video prompts), the prompt metadata may include parameters to determine how the reconstructed data, e.g., audio, is mixed. For instance, which voice is louder when two persons talk simultaneously, or which one is in front of the other one when two persons walk close by. In general, this may be a relevant feature of any generative audio/image/video compression algorithm that uses textual inversion. The learned prompts may need to take overlapping data objects, e.g., overlapping voices, into account. In some cases, it may be more efficient to have more than one learned prompt in such a case (e.g., voice A, voice B, and degree of overlap).

In a fifth variant, e.g., for a metaverse scenario, the image of a person may be linked to a prompt linked to an existing avatar. For instance, a picture of a user may be linked to a prompt "S" which is linked to an avatar Y. An avatar is a digital representation of a user (participant) and this digital representation may be exchanged (with other media, e.g., audio), with one or more users as mobile metaverse media.

In an example of the fifth variant, an avatar call may be established, which is similar to a video call in that both are visual, interactive, provide live feedback to participants regarding their emotions, attentiveness and other social information. Once the avatar call is established, the communicating parties may provide information in uplink direction to the network. A terminal device (e.g., UE) may capture facial information of the call participants and may locally determine an encoding that captures the facial information (e.g., consisting of data points, colouring and other metadata). This encoded information may be transmitted as a form of media uplink and provided by an IP multimedia subsystem (IMS) to the other participant(s) in the avatar call. When the media is received by a terminal device (e.g. UE) of the participant, the media is rendered as a two (or three) dimensional digital representation.

In a related variant, the audio prompt itself may therefore indicate the meaning of the message and the duration of the speech but the content may be locally generated and/or generated by means of other means, e.g., a language model such as a generative pre-trained transformer (GPT) family (https://en.wikipedia.org/wiki/Generative_pre-trained_transformer) of language models such as ChatGPT. The generated text may then be text-voice transformed and fit in the required time interval.

In a further embodiment related to structured vocabulary for prompts and concerning generative models, the description language could be a structured language/vocabulary, a human-readable language, or pseudo-words, e.g., as described in Rinon Gal et al.: "An Image is Worth One Word: Personalizing Text-to-Image Generation using Textual Inversion*".*

In a further embodiment that may be combined with other embodiments or used independently, a user may have an application, e.g., an application running on a smart phone or computer capable of creating and editing content, e.g., audio visual material such as smart home scenes or videos, e.g., by means of or supported by means of at least a generative model and an interpreted programming language. The user, who may become the content owner, may use prompts to create audio, video, images, etc. from the model composing a target content, e.g., audio visual material although it may contain other types of data/content. The user may then store the content and/or transmit the content to at least a (receiving) user/device, either locally or remotely.

In a further related embodiment, the generated content may be considered or called synthetic data that is specified by means of a "content program" that is taken as input by an interpreter of an "interpreted programing language" that relies on the generative model for the interpretation.

In a further related embodiment, since the semantic control model may provide the user with some options when the user tries a prompt, the user may choose one of the outputs of the model; since multiple generative models may be involved, the user may include the model identifier and/or version to ensure that the receiving party can regenerate the same content; since the generated audio/images/videos/etc. may not fully satisfy the user, the user may tweak (during the content creation process) the output and include changes with respect to the data. During the content creation process, the user may also take audio/video/... samples and assign them to a prompt so that the model is enhanced based on the user defined input. The user may create the content, e.g., a video or a smart home scene, by using a programming language where a "content program" (or program) may be as in the following example:

| |
|---|
| [New smart home scene, Duration 12 seconds, Resolution xyx] |
| [Generative model ID xyz, version vxyz] |
| [Background smart home scene: part in spring, sunny weather] |
| [Background smart home sound: happy piano music] |
| [Prompt: "funny video, small white cat"; Prompt_output: #3; Start time: 1 second; Duration: 10 seconds; Action: "walks from left to right"] |
| [Prompt: "unny video, big fat dog"; Prompt_output: #2; Start_time: 2 second; Duration: 9 seconds; action: "walks from right to left"; action: "smells cat and smiles"; action: "follows cat"] |

In this example of a "content program", a new command is given, e.g., in a new line between brackets. This means that a standard is required to determine what a new command is.

In this example, one or more (generative) models are indicated. It may be indicated by, e.g., means of a name or a URL. These generative models are then used by the interpreter to generate the content specified by the "content program".

In this example, there may be some keywords useful to determine which type of content is to be generated. Examples of those key words may be: "new", "smart home scene", "duration", "resolution", "Generative model", "Background image", "Background sound", "Prompt", "Prompt_output", "Start_time", "Duration", etc.

In this example, there may be a standard way of indicating which actions are associated to the keywords, e.g., the sequence [Keyword: Action;] may be used to indicate with "Keyword" that a new keyword is starting where the action associated to the keyword appears after ":" and ends with ";".

This information may be entered as text or by means of other type of user interface such as a graphical user interface.

The user may then play the generated smart home scene and further edit it until the user is satisfied with it. In this moment the user may release/publish it.

In order to verify the user who published the content, the data (or the hash of it) used to generate the (audio visual) content maybe signed by the user. A fingerprint may be made available (e.g., attached to the content or available in a public repository or blockchain) and the data may also be made available to allow other users to further create content based on it.

The "content program" may be played in a slightly different way in different smart environments, e.g., depending on the type of smart devices available.

When playing the "content program", the "content program" or user may specify which smart devices may be used to play the content.

The "content program" may also be extracted from a smart environment/scene so that it can be replayed in a different smart environment.

Different embodiments may be combined with each other or may be used independently as required to address requirements and/or missing capabilities.

To summarize, apparatuses and methods for controlling a smart environment have been described, wherein a semantic control model (such as a (generative) AI or ML model) is used to efficiently control smart devices, wherein the smart devices may be configured to store the semantic control model. Furthermore, the smart devices may be configured to receive prompts and to apply the received prompts to the stored semantic control model in order to derive and reproduce a smart device configuration.

Furthermore, this invention can be applied to various types of UEs or terminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated. Additionally, the expression "at least one of A, B, and C" is to be understood as disjunctive, i.e., as "A and/or B and/or C".

A single unit or device may fulfil the functions of several items recited in the claims. The mere fact that certain measures are recited in mutually different dependent claims does not indicate that a combination of these measures cannot be used to advantage.

The described operations like those indicated in the above embodiments (e.g., Figs. 2 to 4) may be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus (111, 112, 121-126) for controlling at least one smart device (121-126), in particular a sensor and/or an actuator, in a smart environment (101, 102), wherein the apparatus (111, 112) is configured to generate, adapt, retrieve or receive at least one of a semantic control model associated to the at least one smart device (121-126) and a semantic prompt associated to a scene and to use at least one of the semantic control model and the semantic prompt to control the at least one smart device (212-126).

2. The apparatus (111, 112, 121-126) of claim 1, wherein the apparatus (111, 112, 121-126) is configured to distribute at least one of the semantic control model and the semantic prompt to the at least one smart device (121-126).

3. The apparatus of (111, 112, 121-126) of claim 1 or 2, wherein the apparatus (111, 112, 121-126) is configured to receive a command, derive or obtain a control prompt from the command, and apply the control prompt to the semantic control model to obtain a device configuration.

4. The apparatus (111, 112, 121-126) of claim 3, wherein the apparatus (111, 112, 121-126) is configured to use the device configuration to control the at least one smart device (121-126).

5. The apparatus (111, 112, 121-126) of claim 3 or 4, wherein the apparatus (111, 112, 121-126) is configured to refine the semantic control model and/or the control prompt based on feedback obtained from a user (105, 106).

6. The apparatus (111, 112, 121-126) of any one of claims 3 to 5, wherein the apparatus (111, 112, 121-126) is configured to receive an indication of the semantic control model and/or control prompt from a remote device.

7. The apparatus (111, 112, 121-126) of any one of the preceding claims, wherein the apparatus (111, 112, 121-126) is configured to contact a cloud-based service (131, 132) and/or blockchain to retrieve and/or verify the semantic control model for the smart device (121-126).

8. The apparatus (111, 112, 121-126) of any one of the preceding claims, wherein the apparatus (111, 112, 121-126) is configured to tailor the semantic control model to the smart environment (101, 102) of the smart device (121-126) by taking into account one or more of capabilities of available smart devices (121-126), user preferences, and location of smart devices (121-126).

9. The apparatus (111, 112, 121-126) of any one of the preceding claims, wherein the apparatus (111, 112, 121-126) is configured to control a smart device (124) in a second environment (102) based on a device configuration including the semantic control model and a control prompt of a first environment (102).

10. A hub (111, 112) or a smart device (121-126) comprising an apparatus according to any one of claims 1 to 9.

11. A smart device (121-126) configured to receive or retrieve a device configuration including a semantic control model and a control prompt for controlling the smart device (121-126).

12. The smart device (121-126) of claim 11, wherein the smart device (121-126) is configured to infer the device configuration by identifying other smart devices in a smart environment (101, 102) and determining their settings.

13. A system comprising a hub (111, 112) according to claim 10 and one or more smart devices according to any one of claims 10 to 12.

14. A method of controlling a smart device (121-126), in particular a sensor and/or an actuator, in a smart environment (101, 102), wherein the method comprises:
- generating, adapting, retrieving or receiving at least one of a semantic control model and a semantic prompt associated to a scene at a hub (111, 112) or a smart device (121-126) of the smart environment (101, 102), wherein at least one of the semantic control model and the semantic prompt is associated or applicable to the smart device (121-126); and
- using at least one of the semantic control model and the semantic prompt to control the smart device (212-126).

15. A method of controlling a smart device (121-126), in particular a sensor and/or an actuator, in a smart environment (101, 102), wherein the method comprises:
- receiving a device configuration including at least one of a semantic control model and a semantic prompt at the smart device (121-126); and
- controlling the smart device (121-126) based on the device configuration.

16. A computer program product comprising code means for producing the steps of claim 14 or 15 when run on a computer device.
